# EUROPÄISCHE PATENTANMELDUNG

(11) **EP 1 197 530 A1**
(43) Veröffentlichungstag der Anmeldung: **17.04.2002**
(21) Anmeldenummer: 00122422.9
(22) Anmeldetag: 13.10.2000
(51) Int. Cl.: C09D 5/00, C09D 11/02, B24C 1/04, B44C 1/22

(54) **Siebdruckbarer Dispersionslack**

(71) Anmelder: Kissel & Wolf GmbH, D-69168 Wiesloch (DE)
(72) Erfinder: Wittemann, Günter, 69234 Dielheim (DE); Tinsel, Guy, 67460 Souffelweyersheim (FR)
(74) Vertreter: Paul, Dieter-Alfred, Dipl.-Ing.

(57) **Zusammenfassung**

Die Erfindung betrifft einen siebdruckbaren Dispersionslack, der als getrocknete Lackschicht sandstrahlresistent ist und eine filmbildende Substanz A und eine die Ablösbarkeit der Lackschicht unter Wassereinfluß verbessernde Substanz B enthält. Dieser siebdruckbare Dispersionslack ist dadurch gekennzeichnet, daß die Substanz B in einer solchen Konzentration vorhanden ist, daß die Lackschicht wasserlöslich oder -dispergierbar oder -suspendierbar ist.

## Beschreibung

Die Erfindung betrifft einen siebdruckbaren Dispersionslack, der als getrocknete Lackschicht sandstrahlresistent ist und eine filmbildende Substanz A und eine die Ablösbarkeit der Lackschicht unter Wassereinfluß verbessernde Substanz B enthält.

Zur Herstellung von Bebilderungen, Strukturen oder Mustern auf Substratoberflächen wie Glas, Stein, Kunststoffe, Keramiken, Metalle oder Holz werden auf die Substratoberfläche zunächst Masken durch selektives Auftragen einer Lackschicht erzeugt, bevor die Oberfläche mit einem Abrasivstoff sandgestrahlt wird. Dabei schützt die Maske diejenigen Flächen, die nicht durch den Sandstrahl beaufschlagt werden sollen, währen die frei gebliebenen Substratoberflächen eine für Sandstrahlen typische Struktur erhalten.

In der EP 0 672 500 A2 ist ein für solche Anwendungen geeigneter und deshalb sandstrahlresistenter Dispersionslack beschrieben. Er ist für die Aufbringung mit Hilfe des Siebdrucks geeignet. Der Dispersionslack enthält eine filmbildende Substanz A in Form einer wäßrigen Dispersion, die beispielsweise ausgewählt ist aus der Gruppe, die aus Polyvinylacetatharzen, Ethylen-Vinylacetat-Copolymeren, Vinylacetat-Acrylat-Copolymeren, Acrylcopolymeren und Polyurethan-Copolymeren bestehen kann. Des weiteren ist zumindest eine wasserlösliche Substanz B vorhanden, die beispielsweise aus der Gruppe ausgewählt ist, die aus Arginsäurederivaten, Natriumcarboxymethylcellulose, Methylcellulose, Polyvinylalkoholharzen und Polyethylenoxiden besteht. Die Filmbildungstemperatur soll 10°C oder geringer sein, und auch die Substanz B soll die Eigenschaft haben, filmbildend zu wirken.

Die Hauptaufgabe der Substanz B besteht darin, die Ablösbarkeit der auf die Substratoberfläche aufgebrachten Lackschicht nach dem Sandstrahlvorgang zu verbessern. Hierzu ist die Substanz B in einer solch begrenzten Konzentration vorhanden, daß die Lackschicht unter Einwirkung von Wasser aufquillt und deshalb einfacher entfernt werden kann. Die immer noch in Schichtform vorliegenden Lackrückstände können dann aus dem Wasser abgefiltert werden.

Der Nachteil dieses Dispersionslacks besteht darin, daß zur Entfernung der Lackschicht Wasser nicht ausreicht, sondern daß die Entfernung mechanisch unterstützt werden muß. Der Zeit- und Arbeitsaufwand ist entsprechend hoch, und die Entfernung birgt zudem die Gefahr, daß ungeeignete Geräte eingesetzt werden, die zu Kratzern gerade an den Oberflächen führen, die zuvor durch die Lackschicht geschützt waren. Der Erfindung liegt somit die Aufgabe zugrunde, einen Dispersionslack zu formulieren, der wesentlich einfacher und schneller von der Substratoberfläche entfernt werden kann.

Diese Aufgabe wird erfindungsgemäß dadurch gelöst, daß die Substanz B in einer solchen Konzentration vorhanden ist, daß die Lackschicht wasserlöslich oder -dispergierbar oder -suspendierbar ist. Im Vergleich zu dem Dispersionslack nach der EP 0 672 500 A2 ist die Substanz B in einer solchen, d. h. höheren Konzentration vorhanden, daß die Lackschicht lediglich durch Einwirken von Wasser entfernt werden kann, es hierzu also keiner weiteren Handhabung bzw. Werkzeuge bedarf. Die Abreinigung der Substratoberflächen ist folglich wesentlich einfacher und geht schneller vor sich. Gleichwohl besteht kein Problem, die gelöste, dispergierte oder suspendierte Lackschicht aus dem Wasser wieder herauszufiltern, so daß das Abwasser nicht belastet wird.

Selbstverständlich besteht die Möglichkeit, daß sowohl die Substanz A als auch die Substanz B aus mehreren Teilsubstanzen zusammengesetzt sind, die jeweils die den Substanzen zugeordneten Eigenschaften haben, also entweder die Filmbildung unterstützen oder die Wasserauflösbarkeit verbessern. Beide Substanzen sollten dabei Teil des Bindemittels des Dispersionslackes sein.

Für die Substanz A kommen die in den Ansprüchen 4 bis 6 angegebenen Substanzen jeweils allein oder auch in Kombination in Frage. Welche der Substanzen ausgewählt werden, hängt von den jeweils geforderten Eigenschaften ab, wobei die Haupteigenschaften die Filmbildungsfähigkeit, die Siebdruckbarkeit und die Sandstrahlresistenz sind.

Was die Substanz B angeht, können die in den Ansprüchen 8 bis 11 angegebenen Substanzen allein oder in Kombination angewendet werden. Ihr Anteil hängt stark von der Art der Substanz A ab, wobei jeweils durch einfache Versuche festgestellt werden kann, wie hoch der Anteil sein muß, damit Wasserlöslichkeit, Wasserdispergierbarkeit oder Wassersuspendierbarkeit eintritt.

Es versteht sich, daß der erfindungsgemäße Dispersionslack auch Additive aus der Gruppe der Weichmacher, Emulgatoren, Entschäumer, Verlaufsmittel, Pigmente, Farbstoffe, Verdicker und/oder Geliermittel enthalten kann. Bezüglich der Weichmacher, Verdicker bzw. Geliermittel und Emulgatoren kommen die in den Ansprüchen 13 bis 15 aufgeführten Substanzen in Frage.

Nach einem weiteren Merkmal der Erfindung ist vorgesehen, daß der Dispersionslack ein hochsiedendes Lösemittel aufweist. Ferner sollten Füllstoffe vorhanden sein, wobei die im Anspruch 17 angegebenen Füllstoffe zweckmäßig sind.

Nachstehend sind drei Beispiele von erfindungsgemäßen Dispersionslacken aufgeführt, wobei für die einzelnen Substanzen Bereiche angegeben sind, innerhalb derer der Anteil der jeweiligen Substanz schwanken kann. Der Buchstabe T bedeutet Gewichtsteile. Es versteht sich, daß innerhalb der angegebenen Bereiche nur solche Werte in Frage kommen, die in der Summe 100 T ergeben.

### Beispiel 1

| | |
|---|---|
| 30-60T | Wasser |
| 10-40T | Carboxylierte Acryldispersion |
| 1-5T | Triethanolamin |
| 0,2-2T | Entschäumer |
| 0,1-1T | Konservierungsmittel |
| 1-5T | Calciumcarbonat |

### Beispiel 2

| | |
|---|---|
| 10-30T | Wasser |
| 1-5T | Polyacrylamid |
| 3-10T | Carboxylierte Acryldispersion |
| 1-3T | Fettsäure |
| 1-5T | Natronlauge |
| 0,1-1T | Pigmentpräparation |
| 0,2-2T | Entschäumer |
| 1-5T | Glycolether |
| 1-5T | Polyvinylpyrrolidone |

### Beispiel 3

| | |
|---|---|
| 10-30T | Wasser |
| 0,5-10T | Polyvinylalkohol (vollhydrolysiert) |
| 10-60T | Vinylacetatdispersion (Copolymer) |
| 10-30T | Adipinsäueester |
| 1-10T | Glycolether |
| 1-5T | Aktivierte Bentonite |
| 1-3T | Fettalkoholethoxylat |
| 0,2-1T | Entschäumer |
| 1-5T | Glycerin |

## Patentansprüche

1. Siebdruckbarer Dispersionslack, der als getrocknete Lackschicht sandstrahlresistent ist und eine filmbildende Substanz A und eine die Ablösbarkeit der Lackschicht unter Wassereinfluß verbessernde Substanz B enthält, **dadurch gekennzeichnet, daß** die Substanz B in einer solchen Konzentration vorhanden ist, daß die Lackschicht wasserlöslich oder -dispergierbar oder -suspendierbar ist.

2. Dispersionslack nach Anspruch 1, **dadurch gekennzeichnet, daß** die Substanz A und/oder die Substanz B aus mehreren Teilsubstanzen zusammengesetzt ist.

3. Dispersionslack nach Anspruch 1 oder 2, **dadurch gekennzeichnet, daß** die Substanzen A und B Teil des Bindemittels des Dispersionslacks sind.

4. Dispersionslack nach einem der Ansprüche 1 bis 3, **dadurch gekennzeichnet, daß** die Substanz A eine Substanz enthält oder daraus besteht, die aus der Gruppe der Polyacrylate (Copolmerisate und Dispersionen), Polyurethane, Polyester- und/oder Epoxydharze, und/oder Polyvinylacetate (Homo- und Copolymerisate) ausgewählt ist.

5. Dispersionslack nach Anspruch 4, **dadurch gekennzeichnet, daß** die Substanz A eine Substanz enthält oder daraus besteht, die aus der Gruppe der Polyvinylacetat- und/oder Acrylatdispersionen sowie Modifikationen der Acryl- oder Vinylesther mit Ethen und Styrol ausgewählt ist.

6. Dispersionslack nach Anspruch 5, **dadurch gekennzeichnet, daß** die Polyvinylacetat- und/oder Acrylatdispersion zusätzlich copolymerisierte Anteile aus -malinat, -laurat und/oder -versatat enhält.

7. Dispersionslack nach einem der Ansprüche 4 bis 6, **dadurch gekennzeichnet, daß** das Bindemittel des Dispersionslacks eine Mindestfilmbildetemperatur von 8 - 55° C aufweist.

8. Dispersionslack nach einem der Ansprüche 1 bis 7, **dadurch gekennzeichnet, daß** die Substanz B eine Substanz enthält oder daraus besteht, die aus der Gruppe der neutralisierbaren Naturharze, langkettigen Carbonsäuren, homo- und/oder copolymeren Vinylacetate, Polyacrylamide, Polyvinylalkohole, Gelatinen, Cellulosederivate und/oder carboxylierten Acrylpolymeren ausgewählt ist.

9. Dispersionslack nach Anspruch 8, **dadurch gekennzeichnet, daß** der Polyvinylalkohol partiell oder vollständig hydrolisiertes Polyvinylacetat ist.

10. Dispersionslack nach Anspruch 9, **dadurch gekennzeichnet, daß** das Polyvinylacetat einen Hydrolysegrad von 50 - 95 % hat.

11. Dispersionslack nach Anspruch 9 oder 10, **dadurch gekennzeichnet, daß** das Polyvinylacetat einen Polymerisationsgrad von 1000 - 5000 hat.

12. Dispersionslack nach einem der Ansprüche 1 bis 11, **dadurch gekennzeichnet, daß** der Dispersionlack Additive aus der Gruppe der Weichmacher, Emulgatoren, Entschäumer, Verlaufsmittel, Pigmente, Farbstoffe, Verdicker und/oder Geliermittel enthält.

13. Dispersionslack nach Anspruch 12, **dadurch gekennzeichnet, daß** der Weichmacher ein Phtal-, Adipin-, Zitronen- und/oder Benzoesäureester, ein Polyglycol, Phosphorsäureester, Glycerin, Ricinusöl oder auch wasserlöslich auf Basis höher molekularer Ester oder Fettalkohole ist.

14. Dispersionslack nach Anspruch 12, **dadurch gekennzeichnet, daß** der Verdicker bzw. das Geliermittel ein organisch modifiziertes Smectit-Produkt, aktiviertes Bentonit, ein Schichtsilikat, ein Acrylpolymer, Alginat und/oder Polyvinylpyrrolidon ist.

15. Dispersionslack nach Anspruch 12, **dadurch gekennzeichnet, daß** der Emulgator ein Fettsäuresulfonat, anionischer Fettalkoholsulfonat, Polyglycolether oder Ricinusöl ist.

16. Dispersionslack nach einem der Ansprüche 1 bis 15, **dadurch gekennzeichnet, daß** der Dispersionslack hochsiedende Lösemittel aus der Reihe der Glycolether und/oder Glycoletherester enthält.

17. Dispersionslack nach einem der Ansprüche 1 bis 16, **dadurch gekennzeichnet, daß** der Dispersionslack Füllstoffe auf der Basis der Erdalkalisulfate und/oder -carbonate, Stärken, Kaoline, Kieselsäuren und/oder Titandioxide enthält.
